# EUROPEAN PATENT APPLICATION

(11) **EP 4 459 288 A1**
(43) Date of publication of application: **06.11.2024**
(21) Application number: 23171317.3
(22) Date of filing: 03.05.2023
(51) Int. Cl.: G01N 35/00, G01N 35/10

(54) **SYSTEM AND METHOD FOR ALIQUOTING A BIOLOGICAL SAMPLE**

(71) Applicant: Beckman Coulter, Inc., Brea, CA 92821 (US)
(72) Inventor: SICKERT, Manuel, 86932 Puergen (DE); MUELLER, Martin, 83727 Schliersee (DE); KRAFCZYK, Thomas, 82140 Olching (DE)
(74) Representative: Maiwald GmbH

(57) **Abstract**

Summarizing the invention, a patient-sample-handling system is provided. The patient-sample-handling system comprises: an aliquoter unit comprising a dispenser, wherein the dispenser is configured to aspirate a sample volume from a primary sample container and to dispense at least part of the sample volume into a secondary sample container; and a labelling unit configured to affix a label to the secondary sample container; wherein the labelling unit is configured to accommodate the secondary sample container when the dispenser dispenses the at least part of the sample volume into the secondary sample container.

## Description

### Technical Field

The following description relates to the field of testing of biological samples.

### Background

Sample containers are used for holding samples to be tested, e.g. biological samples drawn from a human or animal patient, such as blood samples. Typically, the biological sample is collected at a first location, e.g. by a phlebotomist, and is then transported to a second location for testing/analysis, e.g. to a laboratory. Analytic and clinical laboratories comprise laboratory instruments that are configured to automatically carry out one or more clinical tests on the biological sample.

Typically, one or more sub-samples (or "aliquots") are drawn from the biological sample contained in the (primary) sample container and transferred to one or more secondary sample containers. Aliquoting is performed to preserve the integrity of the biological sample and to efficiently carry out different clinical tests. Prior to receiving the respective aliquot, a secondary sample container is usually provided with a label, e.g. identifying the origin of the sub-sample and/or the tests to be carried out on the particular sub-sample.

### Summary

It is an object of the invention to provide a system for efficient and accurate aliquoting that is easy and cost-effective to manufacture.

The achievement of this object in accordance with the invention is set out in the independent claims. Further developments of the invention are the subject matter of the dependent claims.

According to one aspect, a system is provided, in particular a patient-sample-handling system. The system comprises:
an aliquoter unit comprising a dispenser, wherein the dispenser is configured to aspirate a sample volume from a primary sample container and to dispense at least part of the sample volume into a secondary sample container; and
a labelling unit configured to affix a label to the secondary sample container;
wherein:
   the labelling unit is configured to accommodate the secondary sample container when the dispenser dispenses the at least part of the sample volume into the secondary sample container.

A patient-sample-handling system is a system configured to handle patient samples. The term "patient" is used herein to generally refer to human or animal subjects, independently from their health condition. A patient sample is a biological sample which is obtained from a patient, i.e. a human or animal subject, and on which one or more clinical tests should be carried out.

The biological sample may be a sample of a bodily fluid of the human or animal subject. For example, the bodily fluid may be a physiological fluid, such as blood, saliva, urine, sweat, amniotic fluid, cerebrospinal fluid, ascites fluid, or the like. The biological sample may comprise one or more components that may potentially comprise analytes of interest for performing the at least one clinical test. For instance, blood serum, blood cells and blood plasma are components of a blood sample.

A clinical test may comprise one or more procedures that, when carried out on the biological sample or on a component thereof, allow for estimating the value of a parameter, e.g. a clinical parameter. In particular, a clinical test may comprise physical, biological, optical, mechanical, immunological, and/or chemical procedures.

After the biological sample is collected from the patient, it is put in a sample container. Generally, a sample container is configured to receive and hold a biological sample. Accordingly, the sample container may comprise an opening for receiving the sample and a bottom as well as one or more walls to hold the sample, wherein the opening may be configured to be releasably closed by a closing element, e.g. a cap. In particular, the sample container may have a substantially cylindrical shape (i.e. a cylindrical wall), with the opening at one base and the bottom at the opposite base. The sample container may also be referred to as "tube".

In general, the extent of the sample container along one dimension is greater than the extent along each of the other two dimensions. The greater extent may be referred to as "length" and the direction defined by the length may be the "longitudinal direction". The length of the sample container is the distance between the opening and the bottom. A "longitudinal axis" of the sample container is a symmetry axis of the sample container that extends in the longitudinal direction. For example, in the case of a cylindrical sample container, the longitudinal axis is the axis of the cylinder.

The system may, in particular, be configured to perform one or more preparatory steps on the biological sample, after it has been collected from the patient and before it undergoes the clinical tests. Specifically, a preparatory step may be aliquoting of the biological sample. In particular, the patient-sample-handling system may be an automated system.

The patient-sample-handling system comprises an aliquoter unit comprising a dispenser, wherein the dispenser is configured to aspirate a sample volume from a primary sample container (containing a biological sample) and to dispense at least part of the sample volume into a secondary sample container. Thus, the aliquoter unit is configured to perform aliquoting of a biological sample.

In particular, the aliquoter unit comprises a dispenser capable of aspirating a fluid (e.g. a liquid), i.e. transferring a volume of fluid from the exterior of the dispenser to the interior of the dispenser, as well as of dispensing liquid, i.e. transferring a volume of fluid from the interior of the dispenser to the exterior of the dispenser. Accordingly, the dispenser is also capable of holding the fluid, e.g. after having aspirated it and before dispensing it. In particular, the dispenser may be configured to aspirate fluid from a biological sample (e.g. a liquid biological sample), which is held in a sample container, as well as to dispense fluid into a sample container.

Exemplarily, the dispenser may comprise a pipettor and a pipette tip, and the fluid may be held in the pipette tip. The pipettor may be configured to hold the pipette tip, wherein the pipette tip may be releasably mounted to the pipettor. The pipettor may be configured to perform the act of fluid transfer, e.g. it may comprise mechanical elements for aspirating/dispensing the fluid, such as a pump. The aliquoter unit may comprise a capacitive sensing component coupled to the dispenser that uses capacitance for liquid level detection, i.e. as an indication of whether the pipette tip is outside of or within the fluid, in particular liquid.

The primary sample container and the secondary sample container are both sample containers as described above. They may be identical or they may have one or more differing features, such as shape, material and/or size.

The primary sample container is the sample container that initially holds the biological sample, e.g. the whole biological sample as collected from the patient. In particular, when the primary sample container is received by the patient-sample-handling system, it may already contain the biological sample. The primary sample container may be brought to the patient-sample-handling system by an automated mechanism, such as a conveyor or a robot, and/or by a human user. In particular, the patient-sample-handling system may access an intake area (e.g. a conveyor belt) at which the primary sample container is located.

The biological sample contained in the primary sample container has a total volume. The dispenser of the aliquoter unit is configured to aspirate a sample volume from this total volume, wherein the sample volume is a sub-volume of (i.e. a fraction of) the total volume or coincides with the total volume. Exemplarily, the sub-volume is a smaller volume than the total volume.

The dispenser is configured to dispense at least part of the sample volume to the secondary sample container. The secondary sample container is the sample container that holds at least part of the sample volume (of the biological sample) only after receiving it from the dispenser. In particular, when the secondary sample container is initially loaded in the patient-sample-handling system, it does not contain any fraction of biological sample, e.g. it may be empty or it may contain a reagent. The secondary sample container may be brought to the patient-sample-handling system by an automated mechanism, such as a conveyor or a robot, and/or by a human user. In particular, the patient-sample-handling system may comprise an input unit configured to receive secondary sample containers, as discussed further below.

The sample volume aspirated by the dispenser from the primary sample container is dispensed at least in part into the secondary sample container. The at least part of the sample volume that is dispensed to the secondary sample container may be referred to as "aliquot" of said secondary sample container. In some examples, the dispenser may dispense the whole sample volume to the secondary sample container. In other examples, the dispenser may dispense only a fraction of the sample volume to the secondary sample container. In these cases, the dispenser may exemplarily be configured to distribute the sample volume among a plurality of secondary sample containers, so that each secondary sample container receives a fraction of the sample volume. The dispenser may be configured to dispense a plurality of fractions of the sample volume, wherein the sum of the fractions substantially equals the sample volume, to a respective plurality of secondary sample containers in a temporal sequence, i.e. temporally one after the other.

The aliquoter unit may be configured to move between a primary position and a secondary position, wherein the primary position is different from the secondary position. The primary position is the position of the aliquoter unit at which the aliquoter unit is when it carries out the aspiration of the sample volume. The secondary position is the position of the aliquoter unit at which the aliquoter unit is when it carries out the dispensation of at least part of the sample volume.

Furthermore, when aspirating or dispensing fluid from or to a sample container, the dispenser may be configured to move from a position outside of the sample container to a position in which the dispenser is at least partly (e.g. its pipette tip) within the sample container and back to the position outside of the sample container.

Exemplarily, if a Cartesian coordinate system having *x, y* and *z* axes is assigned to the three-dimensional space, the dispenser may be configured to be movable parallel to any of the axes, so that the movement of the dispenser may be a composite of translations parallel to the three axes. Additionally or alternatively, the movement may include rotations on one, two or three of the axes. In particular, in operation, the z axis may be a vertical axis, i.e. parallel to the direction of the Earth's gravitational pull, while the *x* and *y* axes may define a horizontal plane. The range of movement of the dispenser in the three-dimensional space defines a working space. In other words, the working space is that portion of the three-dimensional space given by the union of all points at which the dispenser can aspirate/dispense.

The patient-sample-handling system may comprise at least one moving component to move the dispenser. Exemplarily, one or more of the at least one moving component may be comprised in the aliquoter unit.

In one example, the patient-sample-handling system may comprise a first moving component configured to move the aliquoter unit as a whole and the aliquoter may comprise a second moving component configured to move the dispenser relative to (the rest of) the aliquoter unit. In particular, the aliquoter unit may comprise a central body including the second moving component and the dispenser may move relative to the central body. Exemplarily, the first moving component may be configured to move the aliquoter unit in the *x-y* plane and the second moving component may be configured to move the dispenser along the *z* axis. For instance, the first moving component may be an *x-y* gantry robot or a two-axis articulated robot, and the second moving component may be driven by a servomotor.

In another example, there may be only one moving component having at least three degrees of freedom and the aliquoter unit may comprise this moving component, such as an n-axis articulated robot, with *n ≥* 3.

Generally, the at least one moving component may be controlled by a computing device. In some examples, the patient-sample-handling system may comprise said computing device, while in other examples the system may be configured to be connected to said computing device, wherein the computing device is external to the system.

The patient-sample-handling system further comprises a labelling unit configured to affix a label to the secondary sample container. In particular, the labelling unit may be configured to affix a label to the secondary sample container before the dispenser dispenses the at least part of the sample volume in the secondary sample container, for instance also before the dispenser aspirates the sample volume from the primary sample container.

The label may comprise secondary data, in the sense that secondary data can be obtained from the label. The secondary data may contain information indicative of one or more aspects relative to the aliquot that is to be dispensed to the secondary sample container.

Exemplarily, the secondary data may comprise one or more of: test data, patient data and sample data. The test data comprise information about one or more tests to be performed on the aliquot that will be held in the secondary sample container and may include for example one or more of the following for each test: an identifier of the test, such as an alphanumeric string, an identifier of one or more pieces of equipment for carrying out the test, one or more instructions for handling the sample prior to or during or after the test (such as centrifuging, including e.g. centrifugation parameters like g-force and spin time), and so on.

The patient data comprise information about the patient to which the aliquot belongs and may include for example one or more of the following: an identifier of the patient (e.g. a name or a unique ID), personal data such as age, gender and so on, insurance number, vital signs measurements such as blood pressure, medical history including pre-existing conditions, indications of health problems like fever, pain, psychological issues, etc.

The sample data comprise information about the aliquot and the biological sample from which the aliquot was aspirated and may include for example one or more of the following: identifier of the primary sample container in which the biological sample was held, type of sample, aliquot volume, phlebotomy time (i.e. time at which the sample was drawn), clotting time, expiration date (i.e. date at which the sample is considered degraded and may be disposed of), storage conditions like temperature, priority of the biological sample (high priority, e.g. for STAT samples, or medium priority or low priority), etc.

The various data sets (test data, patient data and sample data) may be partially redundant with one another, in that one or more pieces of information may belong to more than one data set.

The label may have an adhesive surface and a printable surface opposite the adhesive surface. The adhesive surface may be attached to the secondary sample container. An indicium, such as a barcode, a QR code, may be printed on the printable surface, wherein the indicium may encode the secondary data. In other cases, the indicium may be an RFID chip plus antenna comprised in the label, e.g. between the adhesive surface and the printable surface.

The label may be a sheet of material (or a composite of materials) that is suitable to be affixed to a sample container. In particular, the dimensions of the label and the characteristics of the material(s) may be chosen such that the label can be affixed to the secondary sample container. For instance, the label may be made of paper and/or plastics. Exemplarily, the label may be rectangular and it may be affixed to the secondary sample container such that the long sides are in the direction of the length of the secondary sample container.

The labelling unit comprises means for affixing the (previously printed) label to the secondary sample container, e.g. for bringing the adhesive surface of the label in contact with the secondary sample container. In particular, the labelling unit may be configured to affix the label to the secondary sample container such that the secondary data can be accessed via the label.

In some cases, all points of the label may be affixed to the secondary sample container at the same time. In other cases, the label may be incrementally affixed to the secondary sample container, e.g. different parts of the label may be affixed to the secondary sample container in a temporal sequence, one after the other.

In the latter cases, exemplarily, the labelling unit may be configured to affix the label by rotating the secondary sample container with respect to a fixed attaching position at which the label is provided, wherein the labelling unit is configured to bring the secondary sample container and the label into contact at the attaching position. For instance, the label may be provided on a substrate, e.g. in form of a roll, and may be detached from the substrate prior to or at the moment of coming into contact with the secondary sample container.

The adhesive surface of the label and the wall of the secondary sample container may be conceptually divided into infinitesimal pieces, wherein each infinitesimal piece of the adhesive surface of the label is configured to be affixed to a corresponding infinitesimal piece of the wall of the secondary sample container. At a first time point, a first infinitesimal piece of the adhesive surface of the label and a first infinitesimal piece of the wall of the secondary sample container are both at the attaching position, so that they contact each other and, in virtue of the adhesive, are joined. At a second time point successive to the first time point, the secondary sample container is rotated so that a second infinitesimal piece of the wall of the secondary sample container is at the attaching position. Since the label is already partially attached to the secondary sample container (by means of the first infinitesimal piece), the label is dragged along in the rotation, so that its second infinitesimal piece is brought at the attaching position. The process continues in this fashion until the whole label is affixed to the secondary sample container.

Exemplarily, the labelling unit may further comprise a printer configured to print on the label, e.g. to print an indicium on the label. The printer may be configured to receive or retrieve the secondary data, e.g. from a laboratory information system, and the printer may be configured to create the indicium to be printed on the label. The printer may comprise a processing unit. In particular, the printer may be configured to receive an empty label and print an indicium on the label, and then the printed label may be affixed to the secondary sample container.

As discussed above, the labelling unit is configured to accommodate the secondary sample container when affixing the label to the secondary sample container. Furthermore, the labelling unit is configured to accommodate the secondary sample container when the dispenser dispenses the at least part of the sample volume into the secondary sample container. Thus, the labelling unit is configured to accommodate the secondary sample container both for being labelled and for receiving the aliquot.

The labelling unit may be configured to accommodate only one secondary sample container at the time. Accordingly, a secondary sample container may be received by the labelling unit, labelled, provided with the sample volume and then moved out of the labelling unit, and only then may another secondary sample container be accommodated in the labelling unit for labelling and dispensing, and so on.

In particular, the secondary sample container may be located at the labelling unit when it is provided with the label and may be located at the labelling unit when it receives its aliquot from the dispenser. Exemplarily, the labelling unit may comprise a base onto which the other components are arranged and a location "at the labelling unit" may be a location over the base, wherein the secondary sample container may or may not contact the base. Exemplarily, the labelling unit may comprise a lid, as discussed below, and the secondary sample container may be enclosed between the base and the lid.

In one example, the labelling unit may be configured to accommodate the secondary sample container at the same location both for labelling and dispensation. The location for labelling and dispensation may also be the location at which the secondary sample container is received by the labelling unit, e.g. from a gripping unit, as discussed below. Alternatively, the location at which the secondary sample container is received by the labelling unit may be different from the location for both labelling and dispensation.

In another example, the labelling unit may be configured to accommodate the secondary sample container at a labelling location for being labelled and at an aliquoting location for receiving the aliquot, the labelling location being different from the aliquoting location. Both the labelling location and the aliquoting location are at the labelling unit. The aliquoting location may also be the location at which the secondary sample container is received by the labelling unit, e.g. from a gripping unit, as discussed below.

The patient-sample-handling system is configured such that at least a portion of the labelling unit is within the working space of the dispenser. The dispenser can reach the labelling unit and, in particular, the position therein where the secondary sample container is located for receiving the aliquot (e.g., the aliquoting location). In particular, the dispenser may be configured to dispense the aliquot to the secondary sample container after the secondary sample container has been labelled by the labelling unit.

Furthermore, the patient-sample-handling system is configured such that the dispenser can aspirate the sample volume from the primary sample container, i.e. such that the position at which the sample volume can be aspirated from the primary sample container is within the working space of the dispenser. For instance, at least a portion of an intake area may be within the working space of the dispenser. Exemplarily, the patient-sample-handling system may be configured such that the system can be positioned next to the intake area (e.g. a conveyor onto which the primary sample container is transported), such as within a predetermined distance from the intake area.

When aliquoting a biological sample to a secondary sample container (or a plurality thereof), the secondary sample container needs to be labelled and to receive the aliquot. In the patient-sample-handling system described herein, the labelling and the dispensation occur in a localised area, namely at the labelling unit. Conversely, in conventional systems, a secondary sample container must be transported, after labelling, outside of the labelling unit to another area, where the dispensation can then be performed.

By enabling the dispenser to dispense the aliquot to the secondary sample container while the secondary sample container is at the labelling unit, the secondary sample container needs not be transferred for receiving the aliquot. The aliquoting process is, thus, made more efficient and the design of the system can be simplified. A further advantage thereof is that potential cross contamination of the sample material stemming from transferring the secondary sample container outside the labelling unit can be prevented. Indeed, the empty secondary sample container may be contaminated during transport. Yet another advantage is that the risk of a mix up among various secondary sample containers, namely of dispensing an aliquot from a biological sample into the wrong secondary sample container, is minimised. Indeed, by accommodating the secondary sample container in the labelling unit for dispensing, the secondary sample container is not part of a batch of secondary sample containers (e.g. arranged on a conveyor) when dispensing occurs. Thus, the risk of dispensing into the wrong secondary sample container or dripping into other secondary sample containers is minimised/eliminated.

In a case in which the sample volume is to be distributed among a plurality of secondary sample containers, the labelling unit may be configured to receive and accommodate one secondary sample container at the time, namely one after the other. Accordingly, a first secondary sample container may be received and labelled by the labelling unit and then the dispenser may dispense a first aliquot, i.e. a first fraction of the sample volume, in the first secondary sample container. Afterwards, a second secondary sample container may be received and labelled by the labelling unit and then the dispenser may dispense a second aliquot, i.e. a second fraction of the sample volume, in the second secondary sample container. The same would apply for further secondary sample containers. In this scenario, the dispenser may move to a given *x-y* position prior to dispensing the first aliquot and may remain in the same *x-y* position until the last aliquot has been dispensed, moving only along the *z* axis for each dispensation.

In a particular example, the labelling unit may comprise a holder, the holder being configured to hold the secondary sample container. The holder may be configured to be located at an aliquoting position and the dispenser may be configured to dispense the at least part of the sample volume into the secondary sample container when the holder is at the aliquoting position.

The labelling unit may be configured to accommodate the secondary sample container in that it comprises the holder configured to hold the secondary sample container. In particular, the holder may be configured to hold the secondary sample container in a substantially upright orientation, i.e. such that its longitudinal axis is substantially parallel to the vertical axis, e.g. the *z* axis.

The holder may comprise at least one aperture through which the secondary sample container can be (at least partially) inserted. In one example, the holder may comprise a receiving portion comprising a (first) aperture, wherein the receiving portion is configured to engage one or more features of the secondary sample container such that the sample container is held by the holder. For instance, the secondary sample container may comprise one or more protrusions abutting against the receiving portion, and/or one or more recesses that interlock with the receiving portion.

In addition or as an alternative to the receiving portion engaging one or more features of the secondary sample container, the holder may comprise a base portion configured to support the bottom of the secondary sample container. For instance, the base portion may comprise a second aperture, e.g. smaller than the first aperture, or a recess.

In a case in which the holder comprises both the receiving portion and the base portion, the holder may further comprise a transversal portion configured to join the receiving portion and the base portion.

The secondary sample container is held by the holder of the labelling unit. The aliquoting position is such that, when the secondary sample container is held by holder and the holder is at the aliquoting position, the dispenser can dispense the at least part of the sample volume to the secondary sample container. Thus, when the secondary sample container is held by the holder and the holder is at the aliquoting position, the secondary sample container is at the aliquoting location discussed above.

More specifically, when the holder is at the aliquoting position, the secondary sample container is held by the holder and the aliquoter unit is at the secondary position, dispensation can occur.

In a particular example, the holder may be further configured to move between the aliquoting position and a labelling position; and the labelling unit may be configured to affix the label to the secondary sample container when the holder is at the labelling position. In other words, the labelling unit may be configured to affix the label to the secondary sample container being held by the holder while the holder is at the labelling position.

Thus, the labelling position is such that, when the secondary sample container is held by holder and the holder is at the labelling position, the label can be affixed to the secondary sample container. Accordingly, the location of the secondary sample container when it is held by the holder being at the labelling position is the labelling location discussed above.

In this example, the holder may take at least two different positions within the labelling unit. The labelling unit may comprise means for changing the position of the holder, i.e. for moving the holder. Exemplarily, the labelling unit may comprise an arm that is connected to the holder, the arm being configured to move the holder, e.g. an arm comprising a spring. Accordingly, the holder may comprise a connecting portion configured to be connected to the means for moving the holder, e.g. to the arm. The labelling unit may further comprise a stopping element for maintaining the holder at the aliquoting position.

In this example, the secondary sample container may be received by the holder of the labelling unit when the holder is at the aliquoting position. Accordingly, the aliquoting position may coincide with a receiving position of the holder in the labelling unit. Generally, the receiving position is such that, when the holder is at the receiving position, the holder can receive the secondary sample container, e.g. a gripping unit can release the secondary sample container in the holder. The secondary sample container may be at a receiving location when it is held by the holder at the receiving position. The receiving position may also be the position from which the secondary sample container is removed from the holder, e.g. moved out of the labelling unit.

The holder may start at the receiving/aliquoting position, move to the labelling position and then move back to the receiving/aliquoting position.

The existence of two separate positions for aliquoting and labelling may reduce the risk of contamination, e.g. of the means for affixing the label and of the printer. Furthermore, the negative effect of the means for affixing the label (as "spurious capacitance") on the liquid level detection of the aliquoter unit may be avoided.

In another particular example, the aliquoting position and the labelling position of the holder may coincide, while the receiving position may differ. Accordingly, the holder may be configured to move between the aliquoting/labelling position and the receiving position. The holder may start at the receiving position, move to the aliquoting/labelling position and then move back to the receiving position.

Dispensing and labelling at the same position has a timing advantage, since moving the dispenser away after dispensation can happen in parallel to the holder moving from the aliquoting/labelling position to the receiving position.

In yet another particular example, the holder may be fixed with respect to the labelling unit, i.e. it may be fixedly located at one position, which would be the aliquoting position, the labelling position and the receiving position at the same time. Thus, the aliquoting location, the labelling location and the receiving location of the secondary sample container may also coincide.

In a particular example, the holder may be configured to hold the secondary sample container such that:
the secondary sample container is in a fixed position with respect to the holder, and
the secondary sample container is rotatable on a longitudinal axis of the secondary sample container.

Exemplarily, the secondary sample container and the holder may engage with each other such that a linear movement of the secondary sample container with respect to the holder is restricted (i.e. possible only if a force above a predetermined threshold is applied) while a rotational movement of the secondary sample container on its longitudinal axis is unrestricted. The secondary sample container may thus be restricted in its translational movement along its longitudinal axis, while being free to rotate on its longitudinal axis. As described above, when the secondary sample container is held by the holder, its longitudinal axis is substantially parallel to the vertical axis, e.g. the z axis.

A form-fit connection may be established between the secondary sample container and the holder. For instance, the holder may comprise a receiving portion comprising an aperture, wherein the aperture can be resiliently enlarged from a first size to a second size, wherein the first size is smaller than the second size. This aperture may engage with a recess in the secondary sample container.

The fact that the secondary sample container is fixed with respect to the holder while being rotatable on its longitudinal axis enables a precise application of the label to the secondary sample container while providing stability during dispensation. This applies in particular to the case in which the label is applied by rotating the secondary sample container.

In a particular example, the patient-sample-handling system may further comprise: an input unit configured to accommodate at least the secondary sample container; and a gripping unit configured to move the secondary sample container from the input unit to the labelling unit.

The input unit is accessible to a human user and/or a robot to load secondary sample containers in the patient-sample-handling system. Thus, the input unit may be configured to receive and support at least one secondary sample container, e.g. a plurality of secondary sample containers. In particular, the input unit may function as storage area for a plurality of secondary sample containers, which are to be moved to the labelling unit when aliquoting.

Exemplarily, the input unit may be configured to receive and accommodate racks holding secondary sample containers. A rack is configured to receive and to hold at least one secondary sample container, in particular a plurality of secondary sample containers. Accordingly, the rack may comprise a plurality of receptacles, wherein each receptacle is configured to hold a respective secondary sample container, specifically in a substantially upright orientation. The input unit may comprise a horizontal plate onto which one or more racks may be placed. For instance, the horizontal plate may comprise protrusions and/or recesses configured to engage with the racks so as to keep the racks fixed on the plate.

The gripping unit is configured to move the secondary sample container from the input unit to the labelling unit. If a plurality of secondary sample containers is accommodated at the input unit, the gripping unit may move one secondary sample container at the time.

In one example, the gripping unit may be further configured to remove the secondary sample container from the labelling unit, i.e. to move it to a position outside the labelling unit, e.g. to an output area from which the secondary sample container may be unloaded or to a conveyor that transports the secondary sample container to other instruments. In another example, the patient-sample-handling system may comprise a second gripping unit configured to remove the secondary sample container from the labelling unit after dispensing into the secondary sample container has occurred. The presence of two gripping units improves the throughput of the patient-sample-handling system.

The gripping unit may comprise a gripper configured to grip a secondary sample container, namely grasp the secondary sample container such that it is held fast and is co-movable with the gripper, and to release the secondary sample container, namely to free it from its grasp and allow a physical separation between the gripper and the secondary sample container. For instance, the gripper may be configured to hold an upper portion of a sample container. The gripper may be configured to grip/release one secondary sample container at the time.

Exemplarily, the gripper element may comprise a body and a plurality of gripping fingers, i.e. at least two gripping fingers. The gripping fingers may be identical to each other. A gripping finger may be an elongated part projecting from the body, e.g. in the shape of a round bracket or an angle bracket. The gripping finger may, thus, have one extremity joined to the body (e.g. to an underside of the body) and another extremity that is free to come into contact with the secondary sample container.

The gripping fingers may be configured to move relative to each other. In order to grip a secondary sample container, the gripping fingers may be configured to collectively switch from an open position, in which the linear separation between the free extremities (in particular between each pair of free extremities) is at its maximum, to a closed position, in which the gripping fingers engage the secondary sample container. In order to release a secondary sample container, the gripping fingers may be configured to collectively switch from the closed position to the open position. The gripping fingers may extend substantially along the vertical axis, namely the extremity joined to the body may be above the free extremity, both in the open and closed positions.

In the open and in the closed position, the free extremities of the gripping fingers may lie along a first and a second circumference, respectively, and may be angularly equidistant from each other, i.e., if there are *n* gripping fingers, the angular distance may be 360°/*n*. For instance, the diameter of the first circumference may be greater than the diameter of the secondary sample container and the diameter of the second circumference may coincide with the diameter of the secondary sample container.

The gripping unit may further comprise a drive mechanism configured to move the gripper. For instance, the drive mechanism may be configured to move the gripper as a whole (the body together with the fingers) within the three-dimensional space. In particular, the drive mechanism may move the gripper to a location in the input unit where the secondary sample container is located (e.g. a receptacle in a rack on the input unit) to grip it and subsequently may move the gripper to the labelling unit to release the secondary sample container.

Accordingly, the labelling unit is configured to receive the secondary sample container from the gripper. The secondary sample container may be at the receiving location at the labelling unit after/while it is received by the labelling unit from the gripper. In particular, the gripper may be configured to release the secondary sample container in the holder of the labelling unit, when the holder is at the receiving position.

For example, the drive mechanism may comprise an *x-y* gantry robot or a two-axis articulated robot, together with a servomotor for the z axis. In another example, the drive mechanism may comprise an *n*-axis articulated robot, with *n* ≥ 3.

Generally, the drive mechanism and the gripping fingers may be controlled by a computing device. In some examples, the patient-sample-handling system may comprise said computing device, while in other examples the system may be configured to be connected to said computing device, wherein the computing device is external to the system.

In this particular example, at least respective portions of both the input unit (into which the secondary sample containers are loaded) and the labelling unit (where the secondary sample containers are labelled and receive their aliquots) are within reach of the gripper. The range of movement of the gripper in the three-dimensional space defines a gripping space. In other words, the gripping space is that portion of the three-dimensional space given by the union of all points at which the gripper can grip/release. At least a portion of the input unit, in particular the (entire) portion where the secondary sample container is accommodated, is within the gripping space. Similarly, at least a portion of the labelling unit, in particular the portion comprising the receiving location, is within the gripping space. As discussed above, the receiving location may coincide with the aliquoting location, so that at least a portion of the labelling unit may be both within the working space of the dispenser and within the gripping space of the gripper.

The relative arrangement of the input unit, labelling unit and gripping unit of the patient-sample-handling system simplifies the design of the system and makes the aliquoting process more efficient with respect to conventional systems. For instance, in conventional systems, a bulk storage of secondary sample containers is located at a different level with respect to the labelling unit, so that a lifting module is necessary to lift the secondary sample containers from the bulk storage to the labelling unit.

In a particular example, the holder may comprise a receiving portion including:
at least two contacting elements configured to contact an upper portion of the secondary sample container to hold the secondary sample container in place, wherein
at least two openings configured to allow the gripping unit to release the secondary sample container in the holder and to grip the secondary sample container from the holder are provided between the contacting elements.

As discussed above, the holder holds the secondary sample container substantially in an upright orientation. Thus, the upper portion of the secondary sample container includes the opening of the secondary sample container. For instance, the upper portion may comprise 50% or less of the length of the secondary sample container.

The contacting elements may contact the secondary sample container at any point of its upper portion. In particular, the receiving portion may be substantially flat and lie on a plane perpendicular to the vertical axis of the three-dimensional space, to which the longitudinal axis is aligned when the secondary sample container is in the holder. This plane may intersect the secondary sample container at a distance from the opening that is within 50% of the length, or 30% of the length, or 10% of the length of the secondary sample container. The thickness of the receiving portion, and in particular of the contacting elements, (measured along the vertical axis) may be lower than 3 mm, in particular lower than 2 mm, more particularly lower than 1 mm.

The features of the contacting elements (e.g. shape, position, material) are such that the secondary sample container can be held in place by the holder, exemplarily fixedly with respect to translational movements but free to rotate, as discussed above. Each contacting element is configured to contact the secondary sample container, in particular an outer surface of the secondary sample container. In some examples, the contacting elements may be the only parts of the holder that touch the secondary sample container.

Each contacting element may have a free end configured to contact the secondary sample container and a connected end configured to be connected to at least another contacting element. Each contacting element may extend radially from the free end to the connected end. The shape of a free end may match the shape of a contour of the secondary sample container. The contacting elements may all be identical to each other or may differ from each other.

An open area among the free ends may be configured to receive and hold the secondary sample container, e.g. its size and shape may correspond to at least one cross-section of the secondary sample container in the plane perpendicular to its longitudinal axis. This open area may be the aperture that can be resiliently enlarged from a first size to a second size, as discussed above. For instance, the free ends of the contacting elements may lie along a circumference and the open area may be a circle enclosed by this imaginary circumference.

Besides the open area for the secondary sample container, the receiving portion includes openings formed between pairs of contacting elements. The open area among the free ends may be in communication with the openings, so that a continuous "empty" area may be defined within the receiving portion. The distinction into open area and openings may serve only the purpose of description.

The openings are configured to allow the gripping unit, in particular the gripper, to release the secondary sample container in the holder and to grip the secondary sample container from the holder. The shape and size of the openings is such that the secondary sample container can be at the same time grasped by the gripper and held by the holder. The openings may all be identical to each other or may differ from each other.

In particular, the openings may be configured to allow the gripping fingers of the gripper to engage with the secondary sample container. The number of openings may be equal to or greater than the number of gripping fingers.

The receiving portion may comprise at least two contacting elements, wherein a first opening may be provided between a first contacting element and a second contacting element on one side and a second opening may be provided between the first contacting element and the second contacting element on the other side. Exemplarily, the number of contacting elements may be equal to the number of openings.

Exemplarily, the receiving portion may comprise a circular arc piece from which the contacting elements extend toward the centre of the circle. For instance, the circular arc piece may subtend an angle between about 190° and about 340°.

A contacting element may have a bar shape, wherein one end (connected end) of the bar is attached to the circular arc piece and the other end of the bar is the free end configured to contact the secondary sample container. A contacting element may have the shape of an annulus sector, wherein the inner arc is the free end configured to contact the secondary sample container while the outer arc is the connected end attached to the circular arc piece. The plurality of contacting elements in the receiving portion may all have the same shape or they may have different shapes.

An opening may have the shape of an annulus sector, wherein the outer arc may be defined by the circular arc piece or an ideal continuation thereof, the sides are defined by the two contacting elements adjacent to the opening and the inner arc may be defined by the wall of the secondary sample container.

Exemplarily, the receiving portion may comprise the circular arc piece, four contacting elements and four openings provided between pairs of contacting elements. For instance, the receiving portion may have a clover-like shape. In particular, the receiving portion may comprise a first contacting element having a bar shape, a second contacting element having an annulus sector shape, a third contacting element having an annulus sector shape and a fourth contacting element having a bar shape. A first opening may be provided between the first contacting element and the second contacting element, a second opening may be provided between the second contacting element and the third contacting element, a third opening may be provided between the third contacting element and the fourth contacting element and a fourth opening may be provided between the fourth contacting element and the first contacting element. The openings may all have the shape of annulus sector. The first, second and third opening may have the same size and may be delimited by the circular arc piece, while the fourth opening may have a different size (e.g. a larger size) and may not be delimited by the circular arc piece.

Irrespectively of the specific configuration of the contacting elements and openings, in this particular example the holder is configured to hold the secondary sample container by its upper portion while still allowing the gripper to engage with the secondary sample container. This means that the one and same holder is suitable for:
- allowing aliquoting into the secondary sample container, since it securely maintains the secondary sample container (in particular in an upright orientation);
- allowing transfer of the secondary sample container in and out of the labelling unit, since the secondary sample container may be directly gripped or released by the gripping unit when in the holder; and
- allowing labelling of the secondary sample container, since the most part of the secondary sample container (excluding the upper portion) remains accessible for the label.

Therefore, the handling of the sample is facilitated and the design of the system is simplified, since there is no need for further intermediate transfers of the secondary sample container among different holders within the labelling unit.

As mentioned above, optionally, the holder may comprise a base portion in the shape of a ring onto which the bottom of secondary sample container rests and a transversal portion that joins the base portion and the receiving portion. Even in this case, the advantages described above are provided. In particular, the central portion of the secondary sample container remains accessible for the label.

In a particular example, the aliquoter unit of the patient-sample-handling system may be configured to be connected to a position-determination device; and the holder may comprise at least one marker configured to enable a determination of the position of the at least one marker by means of the position-determination device.

In particular, the position of the at least one marker may be determined relative to the position of the position-determination device. Specifically, the *x-y* coordinates of the position of the at least one marker may be determined. The coordinates may be with respect to any frame of reference used for guiding the movements of the aliquoter unit.

The at least one marker may be situated in the receiving portion of the holder. For instance, the marker may be on a contacting element and/or on the circular arc section. In other instances, the holder may comprise at least one protrusion comprising the respective at least one marker.

The position-determination device may be mechanically connected to the aliquoter unit, e.g. by using a connecting component such as a rigid arm, wherein the connecting component may be fastened to both the aliquoter unit and the position-determination device.

Exemplarily, the position-determination device may comprise a laser emitting device and a marker may be a hole in the holder, e.g. a hole having a characteristic dimension (such as the diameter for a circular hole, the side for a square hole, etc.) between 1 and1.2 times the diameter of the laser spot.

The laser emitting device may scan the *x-y* plane above the holder. In particular, the aliquoter unit to which the position-determination device is connected may be moved (e.g. by a moving component) to scan the *x-y* plane. While scanning, the laser emitting device may emit laser light in the vertical direction. In one example, a user may determine when the laser emitting device is directly above the hole by observing when the laser spot is visible on a surface below the marker.

In other examples, the position-determination device may comprise a photodetector besides the laser emitting device and may detect the presence of the hole as absence of material with respect to its surrounding. Since the laser light travels in the *z* direction, when the hole is detected it means that the laser emitting device is directly above the hole. Thus, the *x-y* position of the hole is the same as that of the laser emitting device, in particular of the specific point from which the laser light is emitted. The position of the aliquoter unit plus laser emitting device is known to the computing device controlling the movement of the aliquoter unit. In particular, the *x-y* position of the aliquoter unit may be characterised by the *x-y* coordinates of the position of the dispenser. The distance between the dispenser and the point from which laser light is emitted may be known a priori, e.g. by design or by measuring it. Accordingly, the *x-y* position of the hole can be determined.

Alternatively to being a hole, the marker may be a dot e.g. of a reflecting material, or a pattern that can be detected by the laser light.

Instead of comprising a laser emitting device, the position-determination device may comprise a camera, or at least one light-sensitive sensor, or an ultrasonic emitting and receiving device, or a device including a tip configured to be aligned with the marker. The at least one marker may be a color-coded feature.

The position of the at least one marker may be used for a calibration procedure carried out prior to any aliquoting operation, as explained in the following.

The calibration may comprise determining the coordinates of the secondary position to which the aliquoter unit must be brought for dispensing the aliquot to the secondary sample container. In particular, the *x-y* coordinates of the secondary position may be determined.

The secondary position of the dispenser may be determined by determining the aliquoting location at which the secondary sample container is configured to be when it is held by the holder in the aliquoting position. In particular, if the *x-y* position of the aliquoter unit is characterised by the *x-y* coordinates of the position of the dispenser, the *x-y* coordinates of the secondary position coincide with the x-y coordinates of the aliquoting location.

The aliquoting location may be determined from the position of the at least one marker as determined by using the position-determination device. Indeed, the distance between the at least one marker and the aliquoting location may be known, e.g. by design or by measuring it. Using the distance and the position of the at least one marker, the x-y coordinates of the aliquoting location may be determined, and, thus, the *x-y* coordinates of the secondary position.

In case there is only one marker, there is only one estimation of the secondary position, which may be affected by errors. By using a plurality of markers, e.g. two markers, a more accurate determination of the secondary position may be made by combining (e.g. averaging) the respective plurality of estimations. Each estimation is obtained by using the position of a given marker and its known distance from the aliquoting location.

In general, the provision of at least one marker on the holder increases the precision of the aliquoting process.

In a particular example, the labelling unit may further comprise a camera configured to capture at least one image of the label affixed to the secondary sample container accommodated in the labelling unit. Exemplarily, the camera may be configured to capture the at least one image when the secondary sample container is in the holder, which is at the labelling position. The camera may be configured to capture at least one video in addition or as an alternative to the at least one image.

The at least one image may show the whole label and/or parts of the label. In particular, the at least one image may be such that it enables a verification that the affixed label is correctly applied to the secondary sample container. For example, one or more of the following may be checked: whether the whole label has been affixed or not, whether the position and/or orientation of the label on secondary sample container meet some predetermined criteria, whether there are ridges and/or tears in the affixed label.

Additionally or alternatively, the at least one image may be such that it enables a verification that the second data can be obtained from the affixed label, in particular from the indicium printed on the label. For example, it may be verified that information can be extracted from the affixed label at all, and it may be verified that this information matches the information comprised in the second data. Accordingly, the information extracted from the affixed label may be compared to information stored in a database. For instance, incorrect information or no information may be obtained from the affixed label if the indicium was not printed correctly, e.g. if there are smudges.

Optionally, the camera may be configured to capture at least one further image when the secondary sample container is in the holder, which is at the aliquoting position, after the dispenser has dispensed the aliquot. The at least one further image may be such that it enables a verification of the quality of the aliquot, e.g. the presence of bubbles in or the transparency of the biological material may be determined.

The at least one image may be provided by the camera to a computing device and the computing device may process the at least one image, e.g. by using image recognition techniques (such as edge detection, character recognition, etc.), to perform any of the verifications above. In some examples, the patient-sample-handling system may comprise said computing device, while in other examples the system may be configured to be connected to said computing device, wherein the computing device is external to the system.

Exemplarily, if an error in the affixing of the label and/or in the printing of the indicium is identified, the patient-sample-handling system may be configured to perform one or more actions to address the error. For instance, a user may be notified and/or the secondary sample container may be transferred to an error area, e.g. by the gripping unit.

The provision of the camera in the labelling unit prevents the occurrence of issues with the label from affecting the aliquoting process.

In a particular example, the patient-sample-handling system may further comprise a lid configured to at least partially cover the labelling unit. In particular, the lid may be configured to be in a closed configuration in which the lid covers at least partially the labelling unit and in an open configuration in which the lid does not cover the labelling unit.

Thus, the lid may be movable with respect to the labelling unit. For instance, the labelling unit may comprise a base onto which the other components are arranged and the lid may be connected to the base of the labelling unit, e.g. by means of a hinge mechanism, such that the lid may swivel between the closed configuration and the open configuration. The lid may be made of transparent material, such as plastic or glass.

In some cases, the lid may be configured to cooperate with the base to enclose the other components of the labelling unit from all sides. For example, the lid may have a cuboid shape with walls for five faces of the cuboid (one face parallel to the base and the other four faces perpendicular to the base). In another example, the lid may have a shape of a half cylinder, with one curved wall and two semi-circular walls.

In other cases, one or more sides of the labelling unit may not be covered by the lid. For instance, the lid may comprise only two, three or four of the walls of the cuboid shape, or the lid may comprise only the curved wall and optionally one semi-circular wall of the half-cylinder shape.

The presence of the lid protects the components of the labelling unit from contaminating agents, such as dust, splashes of liquids handled in the patient-sample-handling system and so on.

The possibility of bringing the lid in the open configuration allows access to the labelling unit, e.g. to a user for maintenance.

In some examples, the lid may be in an open configuration also for allowing access to the dispenser and to the gripper, while it may be in a closed configuration when the system is idle.

In other examples, the lid may comprise an opening configured to allow the dispenser to dispense the at least part of the sample volume into the secondary sample container. The opening may also be configured to allow the gripping unit to grip and release the secondary sample container.

In particular, the opening may be situated in correspondence of (such as above) the aliquoting location, e.g. in correspondence of the aliquoting position of the holder. The size and shape of the opening may be such that the gripper and the dispenser can pass through the opening.

Accordingly, the lid may be in the closed configuration during aliquoting, so that most of the labelling unit is protected, except for a small portion below the opening.

In a particular example, the labelling unit may be arranged on a movable component configured to move between a first position and a second position; at the first position, the labelling unit may be configured to be accessible to the dispenser; and at the second position, the labelling unit may be configured to be accessible to a user. In particular, at the first position, the labelling unit may be also accessible to the gripping unit.

Exemplarily, the movement between the first position and the second position may be in a plane perpendicular to the vertical axis, e.g. the *z* axis. Accordingly, the movable component may be at the same height above ground in both positions. In some cases, the movement between the first position and the second position may be a translation only along one axis, e.g. the *x* axis or the *y* axis. For instance, the movable component may be a drawer.

The labelling unit may be fixed with respect to the movable component, so that the labelling unit co-moves with the movable component. The movable component may comprise a support onto which the labelling unit may be placed.

The movable component may be moved by means of a force applied by a machine or a force applied by a user. In the latter case, the movable component may comprise a handle.

By setting the movable component in the first position, the labelling unit may be brought at least partially within the working space and within the gripping space discussed above. Accordingly, the movable component may be in the first position while the patient-sample-handling system is in use. In particular, while the movable component is in the first position, the lid comprising the opening may remain in the closed configuration.

By setting the movable component in the second position, the labelling unit may be brought within reach of a user. For example, the user may perform maintenance of the labelling unit, e.g. they may replace some components, such as a roll of labels. In particular, while the movable component is in the second position, the lid may be brought in the open configuration.

The provision of the movable component reduces the risk of contamination, because the user does not intrude in the area of the system where the aliquoting takes place. Furthermore, it facilitates access to the labelling unit to the user.

Exemplarily, the input unit may also be arranged on a (second) movable component, such as a drawer. When the second movable component is in a third position, the input unit may be accessible to the gripping unit and when the second movable component is in a fourth position, the input unit may be accessible to a user, e.g. for loading secondary sample containers.

Another aspect of the present invention relates to a method for handling a patient sample. The method may be a method of operating the patient-sample-handling system described herein. Thus, all the aspects and features of the system pertain to the method and vice versa.

The method comprises:
receiving, by a labelling unit, a secondary sample container;
affixing, by the labelling unit, a label to the secondary sample container;
aspirating, by a dispenser of an aliquoter unit, a sample volume from the patient sample contained a primary sample container;
dispensing, by the dispenser, at least part of the sample volume into the secondary sample container while the secondary sample container is at the labelling unit.

Exemplarily, the labelling unit may receive the secondary sample container from a gripping unit. The gripping unit may move the secondary sample container from an input unit to the labelling unit. For example, the gripping unit may release the secondary sample container into a holder comprised in the labelling unit. In particular, the holder may receive the secondary sample container while it is located at an aliquoting position.

The method may comprise moving the holder from the aliquoting position to a labelling position, after receiving the secondary sample container. Once the holder is at the labelling position, the label is affixed to the secondary sample container. After affixing the label, the method may comprise moving the holder from the labelling position back to the aliquoting position.

After the labelling unit has affixed the label or while the labelling unit affixes the label, a dispenser of an aliquoter unit aspirates a sample volume from a primary sample container. Then, the dispenser dispenses at least part of the sample volume into the labelled secondary sample container, while the secondary sample container is at the labelling unit, exemplarily held by the holder at the aliquoting position.

The method can be repeated if more than one sample volume has to be taken from the primary sample container. Furthermore, the method can be repeated for a plurality of primary sample containers.

In cases in which the sample volume has to be distributed among a plurality of secondary sample containers (e.g. two secondary sample containers), the method may comprise:
receiving, by a labelling unit, a first secondary sample container;
affixing, by the labelling unit, a label to the first secondary sample container; aspirating, by a dispenser of an aliquoter unit, a sample volume from a primary sample container;
dispensing, by the dispenser, a first part of the sample volume into the first secondary sample container while the first secondary sample container is at the labelling unit; receiving, by the labelling unit, a second secondary sample container;
affixing, by the labelling unit, a label to the second secondary sample container; dispensing, by the dispenser, a second part of the sample volume into the second secondary sample container while the second secondary sample container is at the labelling unit.

The same applies *mutatis mutandis* for a number of secondary sample containers greater than two.

Exemplarily, the method involving a plurality of secondary sample containers (e.g. two secondary sample containers) may comprise, after dispensing the first part of the sample volume and before receiving the second secondary sample container, moving, by the gripping unit, the first secondary sample container out of the labelling unit.

In a particular example, the labelling unit may comprise a camera, the label may comprise an indicium encoding second data and the method may further comprise:
capturing, by the camera, at least one image of the label affixed to the secondary sample container;
verifying, based on the at least one image, that the affixed label is correctly applied to the secondary sample container and/or that the second data can be obtained from the affixed label.

For instance, the step of verifying may be performed after affixing the label to the secondary sample container and before aspirating the sample volume from the primary sample container. Exemplarily, the steps of aspirating and dispensing may be carried out only if it is verified that the affixed label is correctly applied and/or that the second data can be obtained from the affixed label.

In a particular example, the method may comprise, before receiving the secondary sample container:
determining a position of at least one marker on the holder of the labelling unit, wherein
the holder is at the aliquoting position;
determining a secondary position based on the position of the at least one marker, wherein the secondary position is the position of the aliquoter unit while dispensing the at least part of the sample volume.

This calibration procedure may be done only once, before a first aliquoting process is carried out.

### Brief Description of the Drawings

Details of exemplary embodiments are set forth below with reference to the exemplary drawings. Other features will be apparent from the description, the drawings, and from the claims.
Figure 1 shows a block diagram of an exemplary patient-sample-handling system.
Figures 2a and 2b show a schematic representation of an aliquoter unit and a labelling unit at different moments of an aliquoting process.
Figure 3 shows a lateral view of an exemplary aliquoter unit.
Figures 4a and 4b show an isometric and a top view of a portion of an exemplary labelling unit comprising a holder in an aliquoting position, respectively.
Figure 5 shows a top view of a portion of an exemplary labelling unit comprising a holder in a labelling position.
Figure 6 shows an isometric view of an exemplary holder.
Figure 7 shows an isometric view of an exemplary patient-sample-handling system.
Figure 8 shows a flowchart of an exemplary method for aliquoting.

### Detailed Description

In the following, a detailed description of examples will be given with reference to the drawings. It should be understood that various modifications to the examples may be made. Unless explicitly indicated otherwise, elements of one example may be combined and used in other examples to form new examples.

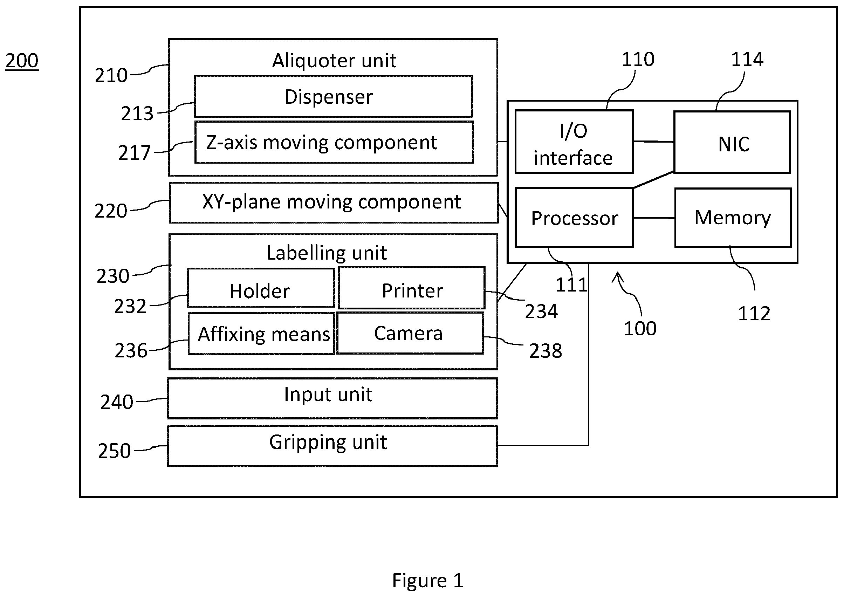

**Figure 1** shows a block diagram of an exemplary patient-sample-handling system 200.

The patient-sample-handling system 200 comprises a computing device 100. Exemplarily, the computing device 100 comprises a processor 111 (e.g. a CPU, a GPU, or the like), and a memory 112. The memory 112 may comprise a primary memory and a secondary memory (not shown). The computing device 100 may also comprise a input output (I/O) interface 110 for communicating with input/output units, such as a screen, a keyboard, a touch screen, a printer, or the like.

Furthermore, the computing device 100 may comprise a Network Interface Controller (NIC) 114 configured to connect said device with one or more networks (e.g. an intranet, the internet, a cellular network, or the like). In other examples, the computing device may comprise a plurality of NICs.

In the example shown in Figure 1, the computing device 100 is physically part of the patient-sample-handling system 200 and may be e.g. located within the patient-sample-handling system 200. The data communication between the computing device 100 and the other components of the patient-sample-handling system 200 may occur via a bus or via an internal network.

In another (not shown) example, the computing device 100 may be external to the patient-sample-handling system 200. In this example, the computing device 100 may be physically distinct from the patient-sample-handling system 200 and may be e.g. located remotely from the patient-sample-handling system 200.

The patient-sample-handling system 200 further comprises an aliquoter unit 210, which comprises a dispenser 213 and a moving component 217 configured to move the dispenser 213 along a vertical axis, denoted as z axis. The aliquoter unit 210 is configured to perform aliquoting of volumes of biological samples.

The dispenser 213 aspirates, holds and dispenses liquid. Exemplarily, the dispenser 213 may comprise a pipettor and a pipette tip. The pipettor comprises a pump for aspirating/dispensing the liquid and holds the pipette tip. The pipette tip may be disposable and releasably mounted to the pipettor. The aliquoter unit 210 further comprises a capacitive sensing component (not shown) coupled to the dispenser 213 for liquid level detection.

The z-axis moving component 217 moves the dispenser 213 downwards and upwards, in particular in and out of tubes. In particular, for aspiration, the z-axis moving component 217 brings at least a portion of the pipette tip inside the tube and below the liquid level of a biological sample contained in the tube. For dispensation, the z-axis moving component 217 brings at least a portion of the pipette inside the tube.

The patient-sample-handling system 200 further comprises a moving component 220 configured to move the aspirating/dispensing device 210 in the horizontal plane, denoted as *x-y* plane, such as an *x-y* gantry. In particular, the *x-y* plane moving component 220 moves the aspirating/dispensing device 210 from a primary tube containing biological sample from which a sample volume must be taken to a secondary tube to which the sample volume should be dispensed.

The patient-sample-handling system 200 further comprises a labelling unit 230 for labelling secondary tubes.

The labelling unit 230 comprises a holder 232, a printer 234, affixing means 236 and a camera 238. The holder 233 is configured to hold one secondary tube in a substantially upright orientation, i.e. such that its longitudinal axis is substantially parallel to the vertical axis, e.g. the *z* axis.

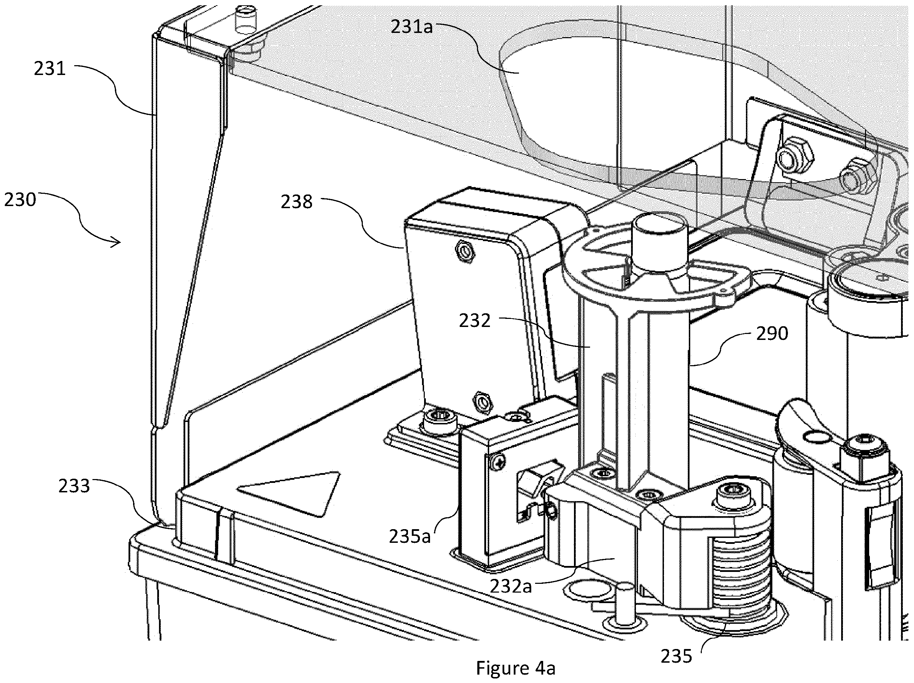

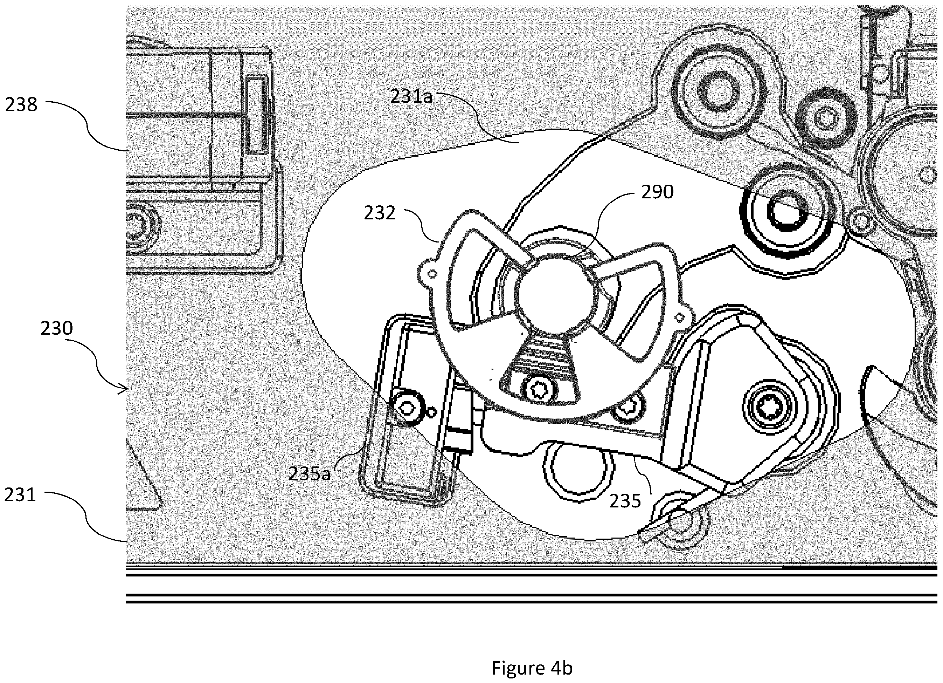

The holder 232 comprises at least one aperture through which the secondary tube can be inserted. In figures 4a and 4b discussed below, the holder 232 moves between an aliquoting/receiving position and a labelling position. In another example (not shown), the holder 232 may move between a receiving position and an aliquoting/labelling position.

The printer 234 takes an empty label as input and prints a barcode containing secondary data on the label. The affixing means 236 bring the printed label from the printer 234 toward the holder 232 holding the secondary tube and attach the printed label on the secondary tube.

The camera 238 is positioned relative to the holder 232 such that it can capture one or more images of the label on the secondary tube when the tube is in the holder 232. The one or more images enable a verification that the label can be correctly read, e.g. that is has been printed and/or affixed correctly.

The patient-sample-handling system 200 further comprises an input unit 240 where secondary tubes can be loaded and stored, ready to be moved to the labelling unit 230 when needed. The input unit 240 comprises a horizontal plate onto which one or more tube racks can be placed.

Furthermore, the patient-sample-handling system 200 also comprises a gripper unit 250 that moves one secondary tube at the time, e.g. from the input area 240 to the labelling unit 230 and from the labelling unit 230 to positions outside the labelling unit 230. The gripping unit 250 comprises a gripper that can grasp and release the secondary tube, the gripper comprising gripping fingers, and a drive mechanism configured to move the gripper. In some examples, the patient-sample-handling system 200 comprises a first gripping unit 250 for moving the secondary tube from the input area 240 to the labelling unit 230 and a second gripping unit 250 for moving the secondary tube from the labelling unit 230 to a position outside the labelling unit 230, e.g. to a conveyor.

The patient-sample-handling system 200 may further comprise other components not shown in figure 1.

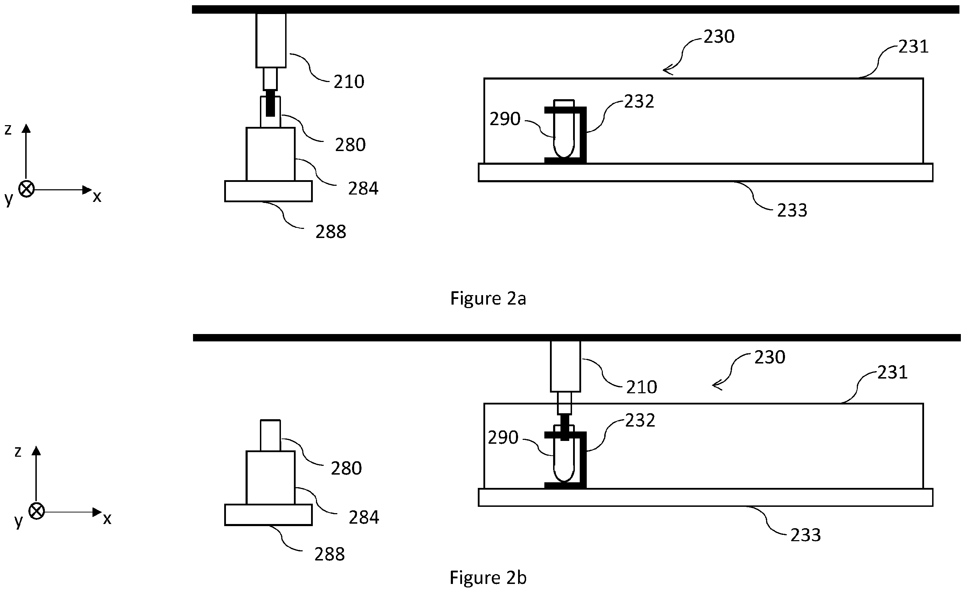

**Figures 2a and 2b** show a schematic representation of an aliquoter unit 210 and a labelling unit 230 at different moments of an aliquoting process.

In particular, figure 2a shows the aliquoter unit 210 at the primary position, namely the position at which the aliquoter unit 210 aspirates the sample volume from the primary tube 280. The primary tube 280 may be held by a support 284, which may be located on a conveyor belt 288 adjacent to the patient-sample-handling system 200. Figure 2a shows also the labelling unit 230, which comprises a transparent lid 231 and a base 233, as well as the holder 232 that holds the secondary tube 290.

At a time point preceding the one shown in figure 2a, the secondary tube 290 may have been brought to the labelling unit 230 from the input unit 240 by the gripping unit 250 and may have been provided by the affixing means 234 with a label printed by the printer 236. Furthermore, the camera 238 may have verified that the label on the secondary tube 290 can be correctly read to obtain the secondary data.

Figure 2b shows the aliquoter unit 210 and the labelling unit 230 at a time point following the time point shown in figure 2a. In particular, figure 2b shows the aliquoter unit 210 at the secondary position, namely the position at which the aliquoter unit 210 dispenses at least part of the sample volume into the secondary tube 290. It can be seen that the secondary tube 290 is held by the holder 232 of the labelling unit 230 while the aliquoter unit 210 dispenses the at least part of the sample volume in it. The lid 231 of the labelling unit 230 comprises an opening for allowing the aliquoter unit 210 access to the secondary tube 290.

Accordingly, between the time point of figure 2a and the time point of figure 2b, the aliquoter unit 210 has been moved from the primary position to the secondary position. The transfer from the primary position to the secondary position may comprise moving by the z-axis moving component 217 the dispenser out of the primary tube 280, then moving by the *x-y* plane moving component 220 the aliquoter unit 210 towards the labelling unit 230, e.g. along both the *x* and *y* axes, and finally moving by the z-axis moving component 217 the dispenser inside the secondary tube 290.

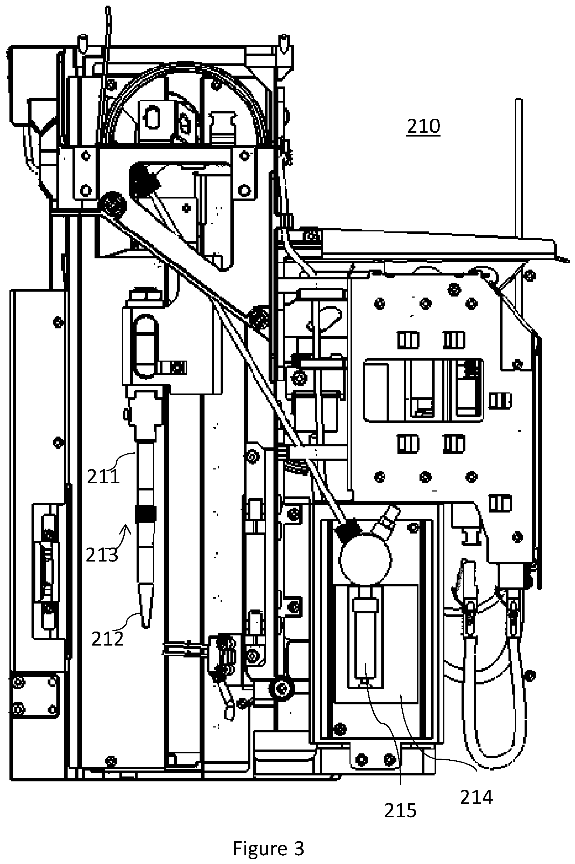

**Figure 3** shows a lateral view of an exemplary aliquoter unit 210. The aliquoter unit 210 comprises the dispenser 213, which includes the pipettor 211 and the pipette tip 212. The pipettor 211 has an elongated shape, in particular a substantially cylindrical shape and comprises a locking portion (e.g. a recess or a protrusion) for engaging with the pipette tip 212. The pipette tip 212 has a generally conical shape and comprises a hole through which liquid can pass through. The pipette tip 212 is made of plastic or glass. The aliquoter unit 210 further comprise the pump 214 and the syringe 215. The aliquoter unit 210 further comprises the *z*-axis moving component 217, which is not visible from the lateral view.

**Figures 4a** **and** **4b** show an isometric and a top view, respectively, of a portion of an exemplary labelling unit 230 comprising a holder 232 in an aliquoting position.

Figure 4a shows the labelling unit 230 with its base 233 resting on a surface of the patient-sample-handling system 200 and the lid 231 closed. The lid 231 leaves one side (the front side in the perspective of figure 4a) of the labelling unit 230 open. On the base 233 of the labelling unit 230 the camera 238 and the holder 232 are arranged. The holder 232 is at the aliquoting position, which means that the secondary tube 290 is at the aliquoting location. The holder 232 schematically shown in figures 2a and 2b is also at the aliquoting position.

From the perspective of figure 4b, it is clearly seen that, when the holder 232 is at the aliquoting position, it is located in correspondence of, specifically directly below, the opening 231a in the lid, so that the secondary tube 290 is accessible to the aliquoter unit 210.

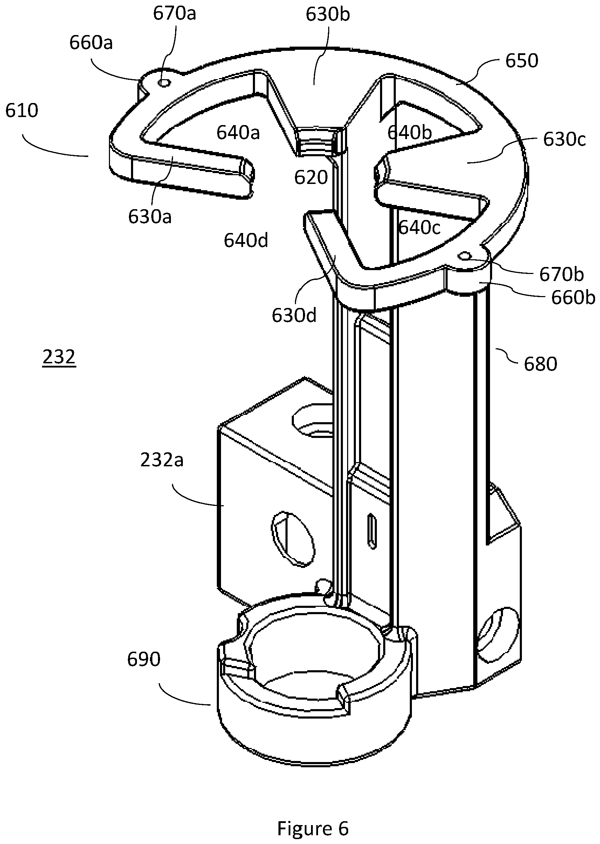

Furthermore, the aliquoting position in this example coincides with the receiving position. Indeed, thanks to the opening 231a, the secondary tube 290 is also accessible to the gripper unit 250 (not shown here). In addition, in virtue of the features of the holder 232, which will be discussed with reference to figure 6 below, the gripper of the gripper unit 250 can release the secondary tube 290 in the holder 232 as well as grasp it from the holder 232.

Figures 4a and 4b also show that the labelling unit 230 comprise an arm 235 that is connected to the holder 232, in particular to the connecting portion 232a of the holder 232, as well as to the base 233. The arm 235 comprises a torsion spring that has a free position and a loaded position. The arm 235 cooperates with a stopping element 235a to maintain the holder 232 at the aliquoting/receiving position, which corresponds to the loaded position of the spring. In particular, the stopping element 235a engages the arm 235 so as to keep it fixed by counteracting the effect of the spring, e.g. by means of a retractable protrusion.

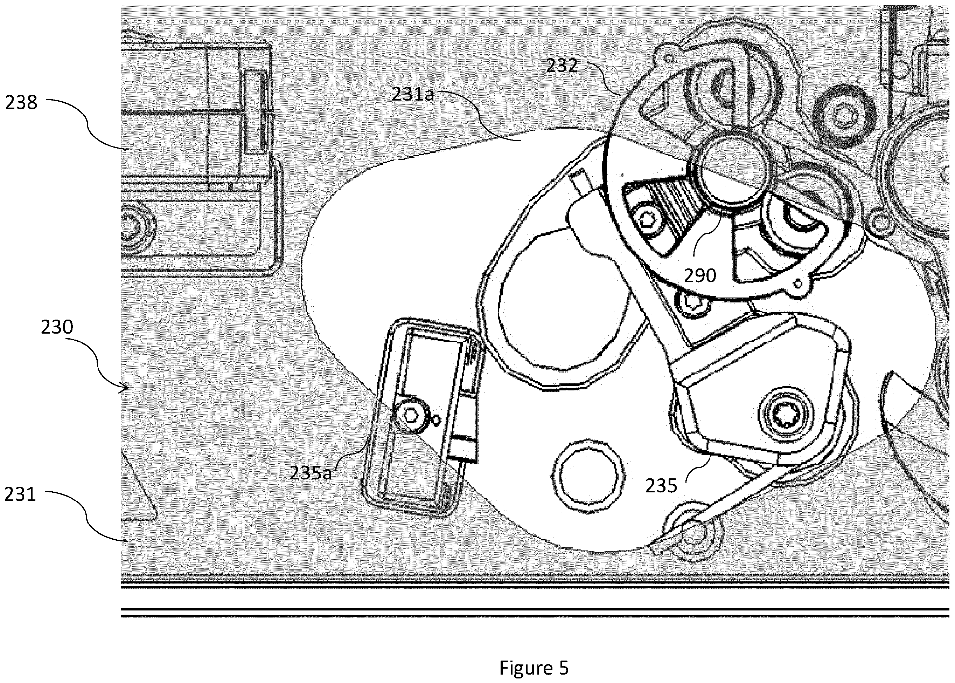

When the stopping element 235a disengages from the arm 235, the spring moves to its free position, making the arm 235 rotate with it. In turn, the rotation of the arm 235 causes the holder 232 to move with it, since they are connected. Specifically, the holder 232 is brought into the labelling position. **Figure 5** shows a top view of a portion of the labelling unit 230 with the holder 232 in the labelling position.

For the aliquoting process, the holder 232 is initially at the aliquoting/receiving position shown in figures 4a and 4b for receiving the secondary tube 290, then is moved to the labelling position shown in figure 5 for being labelled, and finally is moved again to the aliquoting/receiving position for the dispensation.

The features of the holder 232, which, in particular, make the holder suitable for allowing dispensing into the secondary tube 290, for allowing transfer of the secondary tube 290 in and out of the labelling unit, and for allowing labelling of the tube 290 are shown in detail in **Figure 6****.**

The holder 232 comprises a receiving portion 610, a transversal portion 680, a base portion 690, and the connecting portion 232a. The transversal portion 680 connects the three other portions with each other.

The receiving portion 610 comprises an open area or aperture 620, a circular arc piece 650, four contacting elements 630a - 630d and four openings 640a - 640d provided between pairs of contacting elements. The first contacting element 630a has a bar shape, the second contacting element 630b has an annulus sector shape, the third contacting element 630c has an annulus sector shape and the fourth contacting element 630d has a bar shape.

Each contacting element has a connected end attached to the circular arc piece 650 and extends radially and inwardly from the circular arc piece 650 towards its free end. The free ends of the contacting elements 630a - 630d are configured to contact the secondary tube 290 and hold it into place. In particular, the secondary tube 290 may have a circular recess and the free ends of the contacting elements 630a - 630d may engage with the recess.

The aperture 620 among all the free ends is configured to receive and hold the secondary tube 290, so that it is fixed with respect to translational movements but free to rotate. In virtue of the separation provided by the fourth opening 640d, which is not delimited by the circular arc piece 650, the aperture 620 can resiliently enlarged while inserting the secondary tube 290 and then return to its size when the contacting elements 630a - 630d contact the recess in the secondary tube 290.

The openings 640a - 640d allow the gripping unit, in particular the gripping fingers of the gripper, to release the secondary tube 290 in the holder 230 and to grip the secondary tube 290 from the holder 230. The first opening 640a is provided between the first contacting element 630a and the second contacting element 630b, the second opening 640b is provided between the second contacting element 630b and the third contacting element 630c, the third opening 640c is provided between the third contacting element 630c and the fourth contacting element 630d and the fourth opening 640d is provided between the fourth contacting element 630d and the first contacting element 630a. The openings 640a - 640d all have the shape of annulus sectors.

The transversal portion 680 extends from the receiving portion 610, in particular in correspondence of the second opening 640b toward the base portion 690. The base portion 690 is ring-shaped and accommodates the bottom of the secondary tube 290.

The receiving portion 610 further comprises two protrusions 660a, 660b and two respective holes 670a, 670b formed in the protrusions 660a, 660b. The holes 670a, 670b are markers used for calibrating the position of the aliquoter unit 210 with respect to the holder 232, as described above.

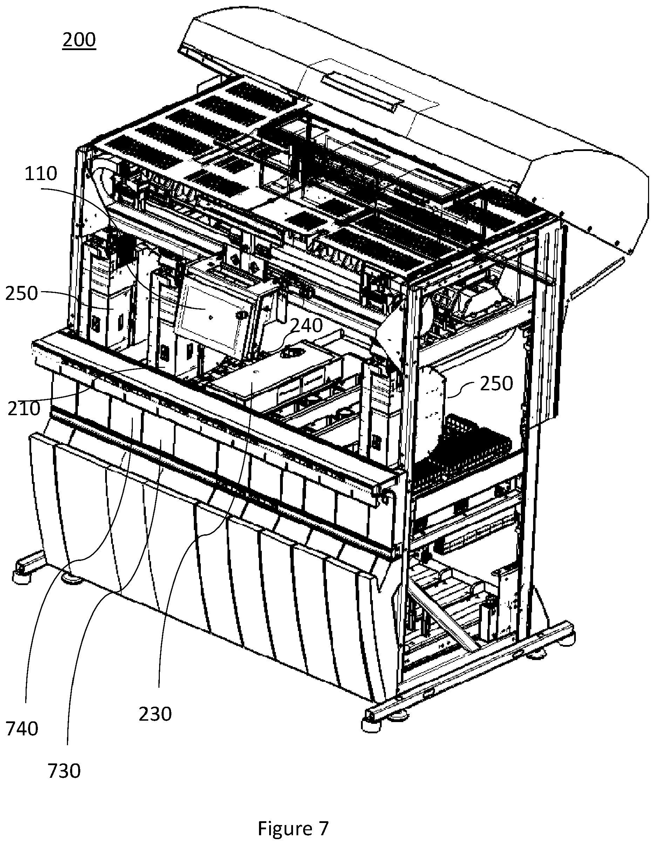

**Figure 7** shows an isometric view of the patient-sample-handling system 200. In particular, figure 7 shows the labelling unit 230, the aliquoter unit 210 and the input unit 240. Furthermore, figure 7 shows a first gripping unit 250 for moving secondary tubes 290 from the input unit 240 to the labelling unit 230 and second gripping unit 250 for moving secondary tubes 290 from the labelling unit 230 e.g. to an output area or a conveyor. The I/O interface 110 is also shown.

In this example, the labelling unit 230 and the input unit 240 are arranged on drawers 730, 740, respectively, and co-moving with their respective drawer. Each drawer 730, 740 comprises a handle and can be pulled out of the patient-sample-handling system 200 as well as pushed into the patient-sample-handling system 200. For example, the drawer of the labelling unit 230 can be pulled out for maintenance and the drawer of the input unit 240 can be pulled out to load secondary tubes 290 on it. When the patient-sample-handling system 200 is in operation, the drawers 730, 740 are "closed".

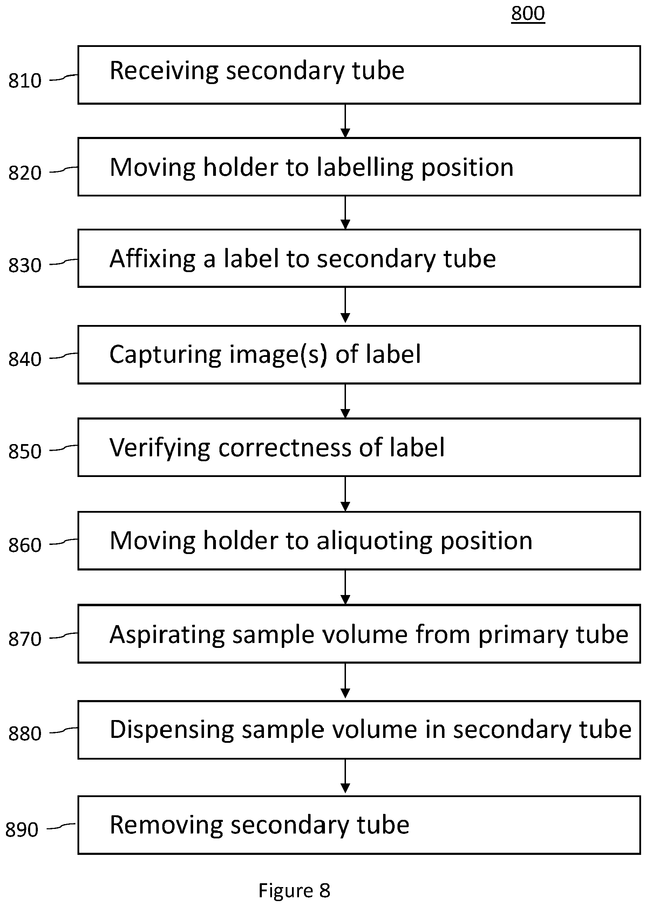

**Figure** 8 shows a flowchart of an exemplary method 800 for aliquoting using the patient-sample-handling system 200. It is noted that some steps of the method may be omitted and that the method may comprise further steps.

The method 800 comprises, at 810, receiving the secondary tube 290 by the labelling unit 230. In particular, the first gripper unit 250 may move the secondary tube 290 from the input unit 240 in the holder 232 of the labelling unit 230, wherein the holder 232 is at the aliquoting/receiving position.

At 820, the method comprises affixing, by the labelling unit 230, a label to the secondary tube 290. Then, at 830, the camera 238 captures one or more images of the label affixed to the secondary tube 290 and, at 840, it is verified by the computing device 100 that the label is correctly affixed to the secondary tube 290 and/or that the secondary data can be obtained from the label.

If there are no issues with the label, the holder 232 is moved from the labelling position to the aliquoting/receiving position at 860. At the same time or afterwards, the aliquoter unit 210 aspirates the sample volume from the primary tube 280 at 870. This means that the aliquoter unit 210 moves to the primary position for aspiration.

At 880, the method comprises dispensing, by the aliquoter unit 210, the sample volume into the secondary tube 290, which is in the holder at the aliquoting/receiving position. Thereafter, at 890, the second gripping unit 250 removes the secondary tube 290 from the labelling unit 230. For instance, the secondary tube 290 is brought by the second gripping unit to an output area or a conveyor.

## Claims

1. A patient-sample-handling system comprising:
an aliquoter unit comprising a dispenser, wherein the dispenser is configured to aspirate a sample volume from a primary sample container and to dispense at least part of the sample volume into a secondary sample container; and
a labelling unit configured to affix a label to the secondary sample container;
wherein:
the labelling unit is configured to accommodate the secondary sample container when the dispenser dispenses the at least part of the sample volume into the secondary sample container.

2. The system of claim 1, wherein:
the labelling unit comprises a holder, the holder being configured to hold the secondary sample container;
the holder is configured to be located at an aliquoting position; and
the dispenser is configured to dispense the at least part of the sample volume into the secondary sample container when the holder is at the aliquoting position.

3. The system of claim 2, wherein:
the holder is further configured to move between the aliquoting position and a labelling position; and
the labelling unit is configured to affix the label to the secondary sample container when the holder is at the labelling position.

4. The system of claim 2 or 3, wherein the holder is configured to hold the secondary sample container such that:
the secondary sample container is in a fixed position with respect to the holder, and
the secondary sample container is rotatable on a longitudinal axis of the secondary sample container.

5. The system of any one of claims 1 to 4, further comprising:
an input unit configured to accommodate at least the secondary sample container; and
a gripping unit configured to move the secondary sample container from the input unit to the labelling unit.

6. The system of claim 5 when dependent on any one of claims 2 to 4, wherein the holder comprises a receiving portion including:
at least two contacting elements configured to contact an upper portion of the secondary sample container to hold the secondary sample container in place, wherein
at least two openings configured to allow the gripping unit to release the secondary sample container in the holder and to grip the secondary sample container from the holder are provided between the contacting elements.

7. The system of any one of claims 2 to 6, wherein:
the aliquoter unit is configured to be connected to a position-determination device;
the holder comprises at least one marker configured to enable a determination of the position of the at least one marker by means of the position-determination device.

8. The system of any one of claims 1 to 7, wherein the labelling unit further comprises a camera configured to capture at least one image of the label affixed to the secondary sample container accommodated in the labelling unit.

9. The system of any one of claims 1 to 8, further comprising a lid configured to at least partially cover the labelling unit.

10. The system of claim 9, wherein the lid comprises an opening configured to allow the dispenser to dispense the at least part of the sample volume into the secondary sample container.

11. The system of any one of claims 1 to 10, wherein:
the labelling unit is arranged on a movable component configured to move between a first position and a second position;
at the first position, the labelling unit is configured to be accessible to the dispenser; and
at the second position, the labelling unit is configured to be accessible to a user.

12. A method for handling a patient sample, the method comprising:
receiving, by a labelling unit, a secondary sample container;
affixing, by the labelling unit, a label to the secondary sample container;
aspirating, by a dispenser of an aliquoter unit, a sample volume from the patient sample contained in a primary sample container;
dispensing, by the dispenser, at least part of the sample volume into the secondary sample container while the secondary sample container is at the labelling unit.

13. The method of claim 12, wherein:
the labelling unit comprises a holder and the holder receives the secondary sample container when the holder is located at an aliquoting position.

14. The method of claim 13 further comprising:
after receiving the secondary sample container and before affixing the label, moving the holder from the aliquoting position to a labelling position;
after affixing the label to the secondary sample container and before dispensing the at least part of the sample volume, moving the holder from the labelling position to the aliquoting position.

15. The method of claim 13 or 14, wherein:
the labelling unit comprises a camera;
the label comprises an indicium encoding second data; and
wherein the method further comprises:
capturing, by the camera, at least one image of the label affixed to the secondary sample container;
verifying, based on the at least one image, that the affixed label is correctly applied to the secondary sample container and/or that the second data can be obtained from the affixed label.

## Amended claims

### Amended claims in accordance with Rule 137(2) EPC.

1. An automated patient-sample-handling system (200) comprising:
an aliquoter unit (210) comprising a dispenser (213), wherein the dispenser (213) is configured to aspirate a sample volume from a primary sample container (280) and to dispense at least part of the sample volume into a secondary sample container (290); and
a labelling unit (230) configured to affix a label to the secondary sample container (290) before the dispenser (213) dispenses the at least part of the sample volume into the secondary sample container (290);
wherein:
the aliquoter unit (210) is configured to move between a primary position and a secondary position, wherein the primary position is different from the secondary position; and
the labelling unit (230) is configured to accommodate the secondary sample container (290) when the dispenser (213) dispenses the at least part of the sample volume into the secondary sample container (290).

2. The system (200) of claim 1, wherein:
the labelling unit (230) comprises a holder (232), the holder (232) being configured to hold the secondary sample container (290);
the holder (232) is configured to be located at an aliquoting position; and
the dispenser (213) is configured to dispense the at least part of the sample volume into the secondary sample container (290) when the holder (232) is at the aliquoting position.

3. The system (200) of claim 2, wherein:
the holder (232) is further configured to move between the aliquoting position and a labelling position; and
the labelling unit (230) is configured to affix the label to the secondary sample container (290) when the holder (232) is at the labelling position.

4. The system (200) of claim 2 or 3, wherein the holder (232) is configured to hold the secondary sample container (290) such that:
the secondary sample container (290) is in a fixed position with respect to the holder (232), and the secondary sample container (290) is rotatable on a longitudinal axis of the secondary sample container (290).

5. The system (200) of any one of claims 1 to 4, further comprising:
an input unit (240) configured to accommodate at least the secondary sample container (290); and
a gripping unit (250) configured to move the secondary sample container (290) from the input unit (240) to the labelling unit (230).

6. The system (200) of claim 5 when dependent on any one of claims 2 to 4, wherein the holder (232) comprises a receiving portion (610) including:
at least two contacting elements configured to contact an upper portion of the secondary sample container (290) to hold the secondary sample container (290) in place, wherein at least two openings configured to allow the gripping unit (250) to release the secondary sample container (290) in the holder (232) and to grip the secondary sample container (290) from the holder (232) are provided between the contacting elements.

7. The system (200) of any one of claims 2 to 6, wherein:
the aliquoter unit (210) is configured to be connected to a position-determination device;
the holder (232) comprises at least one marker configured to enable a determination of the position of the at least one marker by means of the position-determination device.

8. The system (200) of any one of claims 1 to 7, wherein the labelling unit (230) further comprises a camera (238) configured to capture at least one image of the label affixed to the secondary sample container (290) accommodated in the labelling unit (230).

9. The system (200) of any one of claims 1 to 8, further comprising a lid (231) configured to at least partially cover the labelling unit (230).

10. The system (200) of claim 9, wherein the lid (231) comprises an opening configured to allow the dispenser (213) to dispense the at least part of the sample volume into the secondary sample container (290).

11. The system (200) of any one of claims 1 to 10, wherein:
the labelling unit (230) is arranged on a movable component configured to move between a first position and a second position;
at the first position, the labelling unit (230) is configured to be accessible to the dispenser (213); and
at the second position, the labelling unit (230) is configured to be accessible to a user.

12. A method for automatically handling a patient sample, the method comprising:
receiving, by a labelling unit (230), a secondary sample container (290);
affixing, by the labelling unit (230), a label to the secondary sample container (290);
aspirating, by a dispenser (213) of an aliquoter unit (210) at a primary position, a sample volume from the patient sample contained in a primary sample container (280);
moving, by the aliquoter unit (210), from the primary position to a secondary position, wherein the primary position is different from the secondary position;
dispensing, by the dispenser (213) of the aliquoter unit (210) at the secondary position, at least part of the sample volume into the secondary sample container (290) while the secondary sample container (290) is at the labelling unit (230).

13. The method of claim 12, wherein:
the labelling unit (230) comprises a holder (232) and the holder (232) receives the secondary sample container (290) when the holder (232) is located at an aliquoting position.

14. The method of claim 13 further comprising:
after receiving the secondary sample container (290) and before affixing the label, moving the holder (232) from the aliquoting position to a labelling position;
after affixing the label to the secondary sample container (290) and before dispensing the at least part of the sample volume, moving the holder (232) from the labelling position to the aliquoting position.

15. The method of claim 13 or 14, wherein:
the labelling unit (230) comprises a camera (238);
the label comprises an indicium encoding second data; and
wherein the method further comprises:
capturing, by the camera (238), at least one image of the label affixed to the secondary sample container (290);
verifying, based on the at least one image, that the affixed label is correctly applied to the secondary sample container (290) and/or that the second data can be obtained from the affixed label.
